# EUROPÄISCHE PATENTSCHRIFT

(11) **EP 3 424 805 B1**
(45) Veröffentlichungstag und Bekanntmachung des Hinweises auf die Patenterteilung: **28.09.2022**
(21) Anmeldenummer: 18163872.7
(22) Anmeldetag: 26.03.2018
(51) Int. Cl.: B62D 33/06, B60H 1/00

(54) **KABINE FÜR EIN LANDWIRTSCHAFTLICHES ARBEITSFAHRZEUG**
CABIN FOR AN AGRICULTURAL WORKING DEVICE
CABINE POUR UN ENGIN AGRICOLE

(30) Priorität: 06.07.2017 DE 102017115126
(43) Veröffentlichungstag der Anmeldung: 09.01.2019
(73) Patentinhaber: CLAAS Selbstfahrende Erntemaschinen GmbH, 33428 Harsewinkel (DE)
(72) Erfinder: Behnke, Alexander, 33378 Rheda- Wiedenbrück (DE); Deppe, Markus, 33790 Halle/Westf. (DE); Dannigkeit, Florian, 33428 Harsewinkel (DE)
(74) Vertreter: CLAAS Gruppe

(56) Entgegenhaltungen:
- EP-A2- 0 900 718
- DE-T2- 60 309 525
- JP-A- 2014 069 617

## Beschreibung

Die vorliegende Erfindung betrifft eine Kabine für ein landwirtschaftliches Arbeitsfahrzeug gemäß dem Oberbegriff des Anspruches 1 sowie ein landwirtschaftliches Arbeitsfahrzeug mit einer Kabine.

Kabinen für landwirtschaftliches Arbeitsfahrzeug, wie sie in der Land-, Forst oder Bauwirtschaft zum Einsatz kommen, stellen einen vollwertigen Arbeitsplatz dar, der von einer Bedienperson oftmals während eines gesamten Arbeitstages genutzt wird. Beispielhaft sind hier Traktoren, selbstfahrende Erntemaschinen wie Mähdrescher oder Feldhäcksler, Holzvollernter oder Radlader zu nennen. Da solche Arbeitsfahrzeuge unter verschiedensten klimatischen Umgebungsbedingen zum Einsatz kommen, sind die Kabinen mit einer Luftbehandlungsvorrichtung ausgestattet, die zum Kühlen und Erwärmen eines der Kabine zugeführten Frischluftstromes dient.

Eine Kabine für ein Arbeitsfahrzeug gemäß dem Oberbegriff des Anspruches 1 ist aus der EP 2 080 649 B1 bekannt. Die Kabine umfasst einen Boden und ein Kabinendach, zwischen denen, von einer Rahmenstruktur aufgenommen, eine Frontscheibe und Seitenscheiben angeordnet sind, die eine Rundumsicht der Bedienperson ermöglichen. Auf dem Boden der Kabine ist ein Fahrersitz angeordnet. In dem Kabinendach der Kabine ist eine Luftbehandlungsvorrichtung zum Kühlen und Erwärmen eines Frischluftstromes angeordnet, der mittels wenigstens eines Gebläses durch einen im Kabinendach angeordneten Ansaugkanal von außerhalb der Kabine zuführbar ist. Der Zusammenbau und die Montage des Kabinendaches erfolgt auf der Rahmenstruktur, wobei über Kopf gearbeitet werden muss, was unergonomisch ist.

Die Schriften JP 2014 069617 A, DE 603 09 525 T2 und EP 0 900 718 A2 beschreiben weitere bekannte Kabinen.

Aufgabe der vorliegenden Erfindung ist es, eine Kabine für landwirtschaftliches Arbeitsfahrzeug bereitzustellen, welche die Nachteile des Standes der Technik vermeidet.

Die vorstehende Aufgabe wird für eine Kabine erfindungsgemäß durch die Merkmale des Anspruches 1 sowie für ein landwirtschaftliches Arbeitsfahrzeug durch die Merkmale des Anspruches 7 gelöst.

Vorteilhafte Weiterbildungen sind Gegenstand der Unteransprüche.

Gemäß dem Anspruch 1 wird eine Kabine für ein landwirtschaftliches Arbeitsfahrzeug, umfassend einen Kabinenboden, einen darauf angeordneten, aus einer Rahmenstruktur bestehenden Kabinenkörper sowie ein Kabinendach, welches zwei oder mehr Schalen umfasst, vorgeschlagen. Um den Prozess der Montage der Kabine zu vereinfachen ist erfindungsgemäß vorgesehen, dass das Kabinendach als ein vorkonfektioniertes Modul ausgeführt ist, welches auf den Kabinenkörper aufsetzbar ist. Die Vorkonfektionierung bzw. Vormontage hat den Vorteil, dass alle Zusammenbau- und Installationsarbeiten, die das Kabinendach betreffen, vorab durchgeführt werden können. Eine zeitintensivere und aufwendigere Überkopfmontage, wie sie bisher im Stand der Technik üblich ist, entfällt hierdurch. Zudem lässt sich die Zahl der sichtbaren Verbindungselemente von Kabinendach und Rahmenstruktur zumindest reduzieren. Insbesondere im oberen rückwärtigen Bereich der Kabine lassen sich Verbindungselemente je nach Anwendungsbereich respektive Typ des Arbeitsfahrzeugs, auf welchem die Kabine zum Einsatz kommt, in dort vorgesehene Bauteile integrieren. So können bei einem beispielhaft als selbstfahrender Mähdrescher oder Feldhäcksler ausgeführten landwirtschaftlichen Arbeitsfahrzeug die Verbindungselemente im oberen rückwärtigen Bereich der Kabine durch eine Abdeckung auf der geschlossenen Rückwand verdeckt werden. Bei einem beispielsweise als Traktor ausgeführten landwirtschaftlichen Arbeitsfahrzeug lassen sich die Verbindungselemente im oberen rückwärtigen Bereich der Kabine durch die Abdeckung eines Wischermotors verdecken, der an der gläsernen Rückwand der Kabine montiert ist.

Dabei kann die Rahmenstruktur des Kabinenkörpers zur Aufnahme des als Modul ausgeführten Kabinendaches von oben eingerichtet sein. Neben der Vereinfachung der Montage durch den Wegfall der Überkopfmontage gegenüber dem Stand der Technik hat die Ausführung des Kabinendaches als vormontiertes Modul den Vorteil, dass nach der Montage des Kabinendaches im Innenraum keine Verbindungselemente wie Schrauben oder dergleichen sichtbar sind.

Hierzu kann die Rahmenstruktur umlaufend ausgebildete obere Rahmenteile aufweisen, welche mit Befestigungspunkten zur Fixierung des Kabinendaches versehen sind.

Weiterhin ist erfindungsgemäß zwischen den zumindest zwei Schalen des als vorkonfektioniertes Modul ausgeführten Kabinendachs eine Luftbehandlungsvorrichtung angeordnet, welche geneigte Anlageflächen aufweist, die in montierter Position mit komplementären Anlageflächen bündig abschließen. Das Einsetzten der Luftbehandlungsvorrichtung in die Unterschale führt zu einem formschlüssigen Anliegen der Anlageflächen der Luftbehandlungsvorrichtung an den komplementären Anlageflächen, wodurch eine Fixierung der Luftbehandlungsvorrichtung erreicht werden kann.

Insbesondere kann die Luftbehandlungsvorrichtung jeweils zumindest einen Anschluss zur Zu- und Abführung eines Luftstromes aufweist, welche mit korrespondierenden Gegenanschlüssen im Kabinendach verbindbar sind, wobei jeweilige die Anschlüsse der Luftbehandlungsvorrichtung und die Gegenanschlüsse umgebende Rahmenelemente zur Anschlussebene geneigte komplementäre Anlageflächen aufweisen. Durch das bündige und formschlüssige Anliegen kann neben der Fixierung gleichzeitig eine Dichtfunktion durch die Luftbehandlungsvorrichtung selbst erreicht werden. Insbesondere kann einer der Gegenanschluss ein erster Luftverteilkanal sein.

Die jeweiligen Anlageflächen können mit Dichtelementen versehen sein. Diese werden durch die Gewichtskraft der Luftbehandlungsvorrichtung gegeneinander gepresst, so dass es keiner zusätzlichen unterstützenden Mittel bedarf.

Eine weitere Ausführungsform sieht vor, dass in zumindest einer der Schalen des Kabinendachs zumindest eine Führungsnut angeordnet ist, welche der abschnittsweise formschlüssigen Aufnahme wenigstens eines Schlauchs zur Abführung von Kondensat dient. Die zumindest eine Führungsnut dient dazu, den in eine A-Säule der Rahmenstruktur mündenden Schlauch insbesondere im Übergangsbereich vom Kabinendach in die A-Säule knick- und stauchungsfrei zu führen. Dadurch wird die Vormontage vereinfacht. Bei der Montage des vorkonfektionierten Kabinendaches auf der Rahmenstruktur wird durch die Führungsnut verhindert, dass der Schlauch beim Verbinden mit der A-Säule abgeknickt wird, was einen Abfluss des Kondensats zumindest einschränkt.

Weiterhin wird die eingangs gestellte Aufgabe durch ein landwirtschaftliches Arbeitsfahrzeug mit einer Kabine gelöst, die nach einem der Ansprüche 1 bis 7 ausgeführt ist.

Die vorliegende Erfindung wird nachstehend anhand von in den Zeichnungen dargestellten Ausführungsbeispielen näher erläutert.

Es zeigen:
- Fig. 1: ein als landwirtschaftlicher Traktor ausgebildetes Arbeitsfahrzeug;
- Fig. 2: eine Ansicht eines Kabinendaches eines Arbeitsfahrzeuges von unten;
- Fig. 3: eine Längsschnittansicht entlang der Linie A-A gemäß Fig. 2 des Kabinendaches;
- Fig. 4: eine Teilansicht X gemäß Fig. 2 auf eine Unterschale;
- Fig. 5: eine perspektivische Ansicht eines Ausschnitts B gemäß Fig. 2 des Kabinendaches;
- Fig. 6: eine Teilschnittansicht des Kabinendaches entlang der Linie E-E gemäß Fig. 2mit einem Aufnahmeabschnitt für einen Luftfilter;
- Fig. 7: eine perspektivische Ansicht eines den Aufnahmeabschnitt verschließenden Abdeckelementes;
- Fig. 8: eine Teilansicht des Kabinendaches von schräg hinten mit einem zu montierenden Filterschlauch;
- Fig. 9: eine Teilansicht des Kabinendaches 23 von schräg hinten mit montiertem Filterschlauch;
- Fig. 10: eine perspektivische Teilansicht D gemäß Fig. 2 des Kabinendaches von schräg hinten mit einem Wandeinsatz;
- Fig. 11: eine perspektivische Teilansicht D gemäß Fig. 2 des Kabinendaches von schräg hinten mit einem Wandeinsatz gemäß einer weiteren Ausführungsform;
- Fig. 12: eine perspektivische Teilansicht des Kabinendaches von schräg unten;
- Fig. 13: eine Teilansicht des Kabinendaches im Längsschnitt entlang der Linie EE gemäß Fig. 2;
- Fig. 14: eine perspektivische Teilansicht des Kabinendaches von der Seite;
- Fig. 15: eine perspektivische Ansicht der Kabine von schräg unten;
- Fig. 16: eine perspektivische Teilansicht auf die Unterschale von oben (Ausführung der Erfindung).

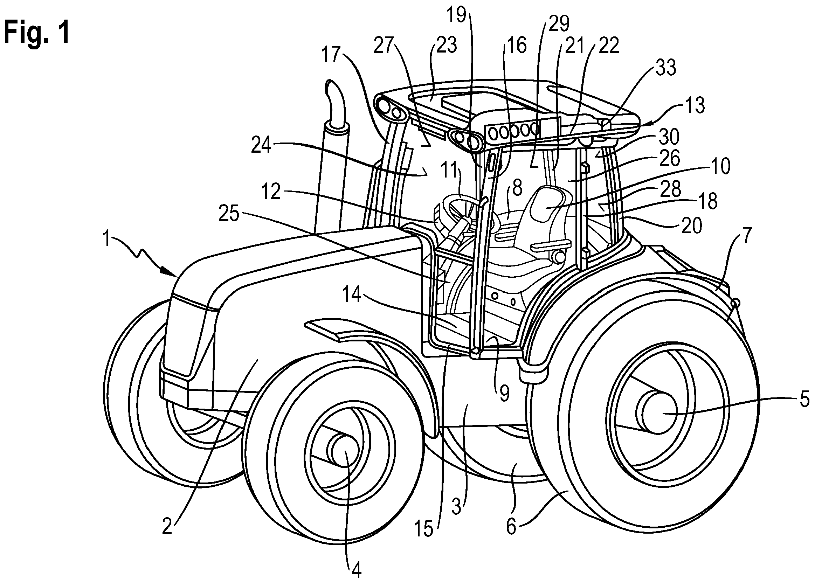

In der Figur 1 ist ein als landwirtschaftlicher Traktor 1 ausgebildetes Arbeitsfahrzeug dargestellt, welches in Blockbauweise ausgebildet ist. Dabei ist ein Motorgehäuse 2 einer Brennkraftmaschine des Traktors 1 mit einem Getriebe- und Hinterachsgehäuse 3 verbunden. In seinem Frontbereich weist der Traktor 1 eine Vorderachse 4 auf, die über ein nicht näher dargestelltes Vorderachsgehäuse am Motorgehäuse 2 befestigt ist. Im Heckbereich des Traktors 1 gehen von dem Getriebe- und Hinterachsgehäuse 3 zwei Radachsen aus, von denen in der Darstellung nach der Figur 1 nur eine Radachse 5 sichtbar ist. Die Radachsen treiben dabei Hinterräder 6 an, die beidseitig des Traktors 1 über einen Teil ihres Außenumfangs von Kotflügeln 7 und 8 abgedeckt sind, wobei die Kotflügel 7 und 8 gemeinsam mit einem Fahrerstand 9 ausgebildet sein können. Auf diesem Fahrerstand 9, der gemeinsam mit den Kotflügeln 7 und 8 ausgebildet ist, sind unter anderem ein Fahrersitz 10, eine Lenkeinrichtung 11 sowie eine Anzeige- und Bedieneinheit 12 angeordnet. Es liegt im Rahmen der Erfindung, dass es sich bei dem Arbeitsfahrzeug auch um einen selbstfahrenden Mähdrescher oder Feldhäcksler sowie um ein sonstiges land-, forstwirtschaftliches oder kommunales Nutzfahrzeug mit einer Kabine handeln kann.

Eine Fahrerkabine 13 des Traktors 1 bildet mit dem Fahrerstand 9 eine Einheit, die gegenüber dem sie tragenden Getriebe- und Hinterachsgehäuse 3 über nicht näher dargestellte Elemente federnd bzw. schwingungsdämpfend gelagert ist. Daher wird von dem Fahrerstand 9 ein Kabinenboden 14 gebildet, und untere Rahmenteile 15 der Fahrerkabine 13 umschließen zum Teil den Kabinenboden 14 und sind in anderen Bereichen oberhalb der Kotflügel 7 und 8 geführt. Von den unteren Rahmenteilen 15 gehen im Frontbereich der Fahrerkabine 13 im Wesentlichen vertikal verlaufende A-Säulen 16 und 17 aus, zu denen beabstandet B-Säulen 18 und 19 und schließlich am Heck der Fahrerkabine 13 hintere Säulen 20 und 21 verlaufen.

Die Säulen 16 bis 21 sind an ihren oberen Enden über obere Rahmenteile 22 miteinander verbunden, wobei diese oberen Rahmenteile 22 umlaufend ausgebildet sind und ein als vorkonfektioniertes Modul ausgeführtes Kabinendach 23 aufnehmen. Wie weiterhin aus der Figur 1 hervorgeht, ist die Fahrerkabine 13 rundherum verglast, d. h., sie weist eine Frontscheibe 24 und von dieser durch Querrahmen abgetrennte, im Fußraum befindliche vordere Frontscheibenteile 25 auf. Weiterhin ist auf beiden Seiten der Fahrerkabine 1 jeweils eine verglaste Kabinentür 26 und 27 vorgesehen, die, wie aus der perspektivischen Darstellung hervorgeht, jeweils schwenkbar an der B-Säule 18 bzw. 19 gelagert ist und an die entsprechende A-Säule 16 bzw. 17 anschlägt. Hinter den verglasten Kabinentüren 26 und 27 befinden sich zwischen der jeweiligen B-Säule 18 bzw.19 und der entsprechenden hinteren Säule 20 bzw. 21 Seitenfenster 28 und 29. Schließlich ist die Fahrerkabine 13 auf ihrer Heckseite, also in dem zwischen den hinteren Säulen 20 und 21 liegenden Bereich durch eine Heckscheibe 30 verschlossen, die zur Verbesserung der Sicht auf im Heckbereich der Kabine 13 angebaute Arbeitsgeräte bis an den Kabinenboden 14 reichen kann.

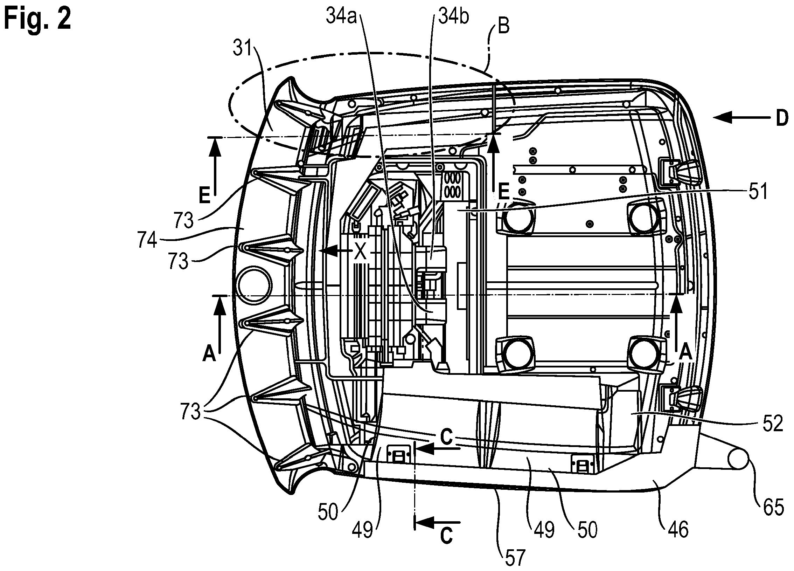

Fig. 2 zeigt das Kabinendach 23 in einer Ansicht von unten, wobei zur besseren Veranschaulichung eine das Kabinendach 23 begrenzende Oberschale 32 transparent dargestellt ist.

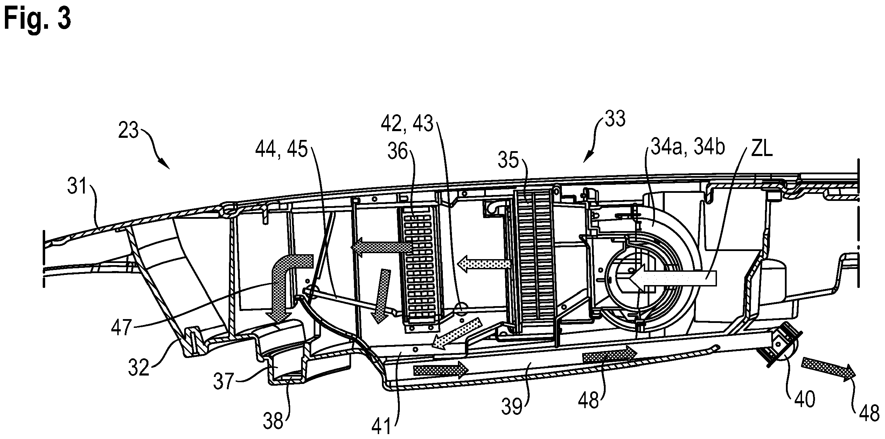

In Fig. 3 ist eine Längsschnittansicht des Kabinendaches 23 entlang der Linie A-A gemäß der Fig. 2 dargestellt. Das Kabinendach 23 umfasst zumindest zwei Schalen, eine Oberschale 31 und eine Unterschale 32. In der dargestellten Ausführungsform ist zwischen der Oberschale 31 und der Unterschale 32 eine Luftbehandlungsvorrichtung 33 angeordnet. Eine hiervon abweichende Anordnung einer Luftbehandlungsvorrichtung ist denkbar, beispielsweise im Bereich außerhalb des Kabinendaches 23, und beschreibt ein nicht durch die Erfindung erfasstes Ausführungsbeispiel. Die Luftbehandlungsvorrichtung 33 weist in Fig. 3 zumindest ein Gebläse 34a bzw. 34b, eine Kühlvorrichtung 35 sowie eine Heizvorrichtung 36 auf. Vorzugsweise sind zwei Gebläse 34a, 34b vorgesehen, die der Kühlvorrichtung 35 einen Zuluftstrom ZL zuführen. Fig. 3 zeigt eine Ansicht des Kabinendaches 23 von oben, wobei die Oberschale 31 transparent dargestellt ist. Der Zuluftstrom ZL wird, wie in Fig. 3 angedeutet, durch einen Ansaugkanals 46 angesaugt und den Gebläsen 34a, 34b zugeführt. Der Zuluftstrom ZL durchströmt die Kühlvorrichtung 35 und gelangt im Anschluss zu der hierzu beabstandet angeordneten Heizvorrichtung 36. Zwischen der Kühlvorrichtung 35 und der Heizvorrichtung 36 ist ein erster Bypass 42 angeordnet. Der Bypass 42 weist ein als Klappe 43 ausgeführtes Strömungsbegrenzungselement auf. In einer einfacheren Ausführung des ersten Bypasses 42 kann der abzuzweigende Volumenstrom gekühlter Zuluft durch zumindest ein Strömungsbegrenzungselement begrenzbar sein, welches als Blende oder Drossel ausgebildet ist. Der nicht durch den ersten Bypass 42 abgezweigte Volumenstrom gekühlter Zuluft durchströmt die Heizvorrichtung 36. Der Heizvorrichtung 36 ist ein zweiter Bypass 44 nachgeordnet. Der zweite Bypass 44 ist als eine Klappe 45 ausgeführt. Der aus der Heizvorrichtung 36 austretende, am zweiten Bypass 44 vorbeigeführte Volumenstrom bildet einen ersten Luftstrom 47, welcher einem ersten Luftverteilkanal 37 zugeführt wird. Der erste Luftverteilkanal 37 weist einen im Wesentlichen U-förmigen Verlauf auf. Dabei verlaufen näherungsweise parallele Teilabschnitte des ersten Luftverteilkanals 37 zumindest abschnittsweise in Längsrichtung der Kabine 13 zwischen der jeweiligen A-Säule 16 bzw. 17 und der jeweiligen B-Säule 18 bzw.19 oder der entsprechenden hinteren Säule 20 bzw. 21. Ein quer verlaufender Teilabschnitt des ersten Luftverteilkanals 37 erstreckt sich im Bereich der Frontscheibe 24 im Wesentlichen über die Breite der Kabine 13. Der erste Luftverteilkanal 37 weist erste Luftaustrittsöffnungen 38 auf. Aus den ersten Luftaustrittsöffnungen 38 tritt der im Wesentlichen entlang der Frontscheibe 24 strömende, nach unten gerichtete erste Luftstrom 47 aus.

Der hinter der Kühlvorrichtung 35 durch den ersten Bypass 42 abgezweigte Teilvolumenstrom gelangt, unter Umgehung der Heizvorrichtung 36, in eine hinter der Heizvorrichtung 35 befindliche Mischzone 41. In diese Mischzone 41 wird ein von dem zweiten Bypass 44 abgezweigter Teilvolumenstrom des von der Heizvorrichtung 36 erwärmten Zuluftstromes ZL eingeleitet. Die beiden Teilvolumenströme bilden einen zweiten Luftstrom 48 der einem zweiten Luftverteilkanal 39 zugeführt wird. Der zweite Luftverteilkanal 39 weist zweite Luftaustrittsöffnungen 40 auf, die in das Innere der Kabine 13 münden. Aus den zweiten Luftaustrittsöffnungen 40 tritt der in Richtung des Fahrersitzes 10 gerichtete zweite Luftstrom 48 aus.

Zwischen dem ersten Luftstrom 47 und dem zweiten Luftstrom 48 besteht eine Temperarturdifferenz, wobei der erste Luftstrom 47 eine höhere Temperatur aufweist, als der zweite Luftstrom 48. Dies hat den Effekt, dass der zweite Luftstrom 48 zum einen der Entfrostung zumindest der Frontscheibe 24 dienen kann sowie der Zuführung wärmer Luft im Bereich des Kabinenbodens 14 als im höher liegenden Bereich des Fahrersitzes 10. Bevorzugt liegt die Temperaturdifferenz zwischen dem zweiten Luftstrom 48 bei Austritt aus den zweiten Luftaustrittsöffnungen und dem ersten Luftstrom 47 bei Erreichen des Kabinenbodens 14 in einem Bereich, welcher im Allgemeinen durch eine Bedienperson ohne technische Hilfsmittel wahrnehmbar ist. Auf diese Weise wird eine Temperaturverteilung in der Kabine 13 erzielt, die von einer Bedienperson als besonders angenehm empfunden wird. Sowohl die Klappe 43 als auch die Klappe 45 können beispielsweise temperaturabhängig angesteuert werden, um die abgezweigten Teilvolumenströme, die zu dem zweiten Luftstrom 48 zusammengeführt werden, zu verändern.

Durch den Ansaugkanal 46 wird von den Gebläsen 34a, 34b der Zuluftstrom ZL angesaugt, welcher zumindest einem als Luftfilter 49 ausgebildeten Filterelement zugeführt wird, wie in Fig. 2 dargestellt. Der oder die Luftfilter 49 sind in Aufnahmeabschnitten 50 im Kabinendach 23 angeordnet. Die Luftfilter 49 sind als Taschenfilter ausgeführt. Anstelle der Taschenfilter sind auch Filterelemente der Kategorie 4 in die Aufnahmeabschnitte 50 einsetzbar, welche zur Anwendung kommen müssen, wenn mit dem Arbeitsfahrzeug 1 beispielsweise Spritzmittel ausgebracht werden sollen. Im Wesentlichen quer zur Frontscheibe 25 ist ein Umluftfilter 51 liegend angeordnet. Der Umluftfilter 51 filtriert aus der Kabine 13 angesaugte Luft, bevor diese erneut der Luftbehandlungsvorrichtung 33 als Umluft zugeführt wird.

Benachbart zu dem Ansaugkanal 46 ist eine Entlüftungsklappe 52 angeordnet, welche das Innere der Kabine 13 mit dem Ansaugkanal 46 strömungstechnisch verbindet. Die Entlüftungsklappe 52 ist nur einseitig betätigbar und öffnet bei einem im Inneren der Kabine 13 schlagartig auftretenden Überdruck, welcher durch das Zuschlagen der Kabinentür 26 hervorgerufen wird. Der durch die Entlüftungsklappe 52 entweichende Luftstrom gelangt durch den Ansaugkanal 46 zu den Luftfiltern 49. Die schlagartig auftretende Luftdruckdifferenz versetzt die Luftfilter 49 in Bewegung bzw. Schwingung. Auf diese Weise lässt sich ein Reinigungseffekt erzielen, indem an den Wänden der Luftfilter 49 abgelagerte Partikel durch die Bewegung abgelöst werden. Zugleich dient der Ansaugkanal 46 der Entlüftung.

Weiterhin zeigt die Darstellung in Fig. 2, dass die Oberschale 31 gegenüber der transparent dargestellten Unterschale 32 an einer Seite einen sich über die Breite des Kabinendaches 23 erstreckenden flächigen Überstand 74 aufweist. Der Überstand 74 stützt sich gegenüber der Unterschale 32 durch zumindest zwei beabstandet zueinander angeordnete Profilelemente 73 an dieser ab. Zur Verringerung des Gewichts bei gleichzeitiger Erhaltung oder Verbesserung der Stabilität sind die Profilelemente 73 im Wesentlichen tetraederförmig oder als 3D-Rippen ausgeführt.

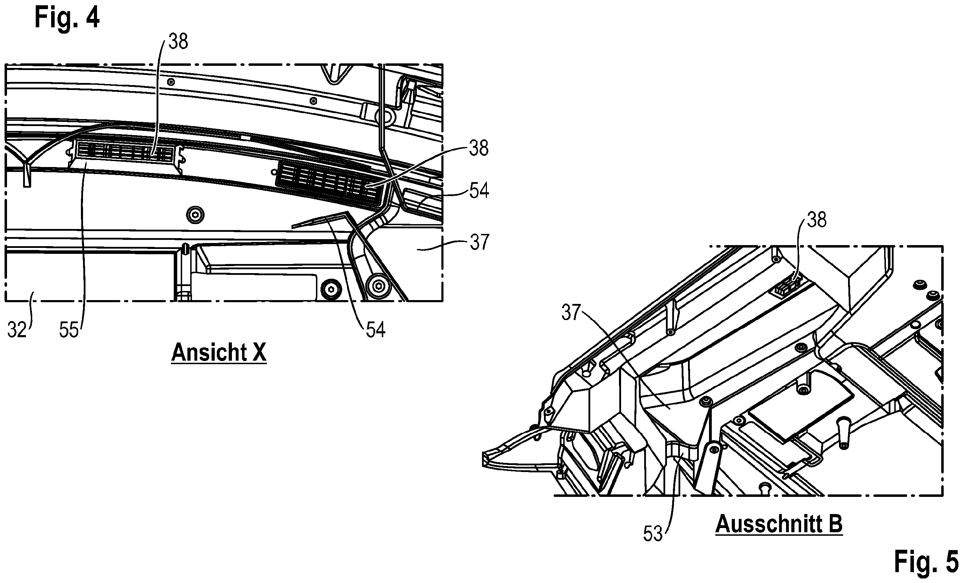

Aufgrund der nur einseitigen Ansaugung des Zuluftstromes ZL wird von dem Gebläse 34a, welches dem Ansaugkanal 46 näherliegend angeordnet ist, anteilig mehr kalte Zuluft zugeführt, als dem zu dem Ansaugkanal 46 weiter beabstandeten Gebläse 34b. Um eine homogene Aufteilung des aus den ersten Luftaustrittsöffnungen 38 ausströmenden ersten Luftstromes 47 zu erreichen, sind zumindest in dem ersten Luftverteilkanal 37 Mittel zur strömungstechnischen Beeinflussung des ersten Luftstroms 47 vorgesehen, was in den Fig. 4 und 5 dargestellt ist. Dabei zeigt die Darstellung in Fig. 4 eine Detailansicht X gemäß Fig. 2. In Fig. 5 ist ein Ausschnitt B gemäß Fig. 2 dargestellt. Bei den Mitteln handelt es sich um Rippen 53, Prallwände 54, Winkel der Prallwände 54 bzw. der Seitenwände des ersten Luftverteilkanals 37 oder sonstige das Strömungsverhalten beeinflussende Bauteile wie ein teilweise offenes Gehäuse 55, welches die erste Luftaustrittsöffnung 38 abschnittsweise umschließt. Ebenso kommt eine Variation einzelner Querschnitte des ersten Luftverteilkanal 37 zur Strömungsbeeinflussung zum Tragen.

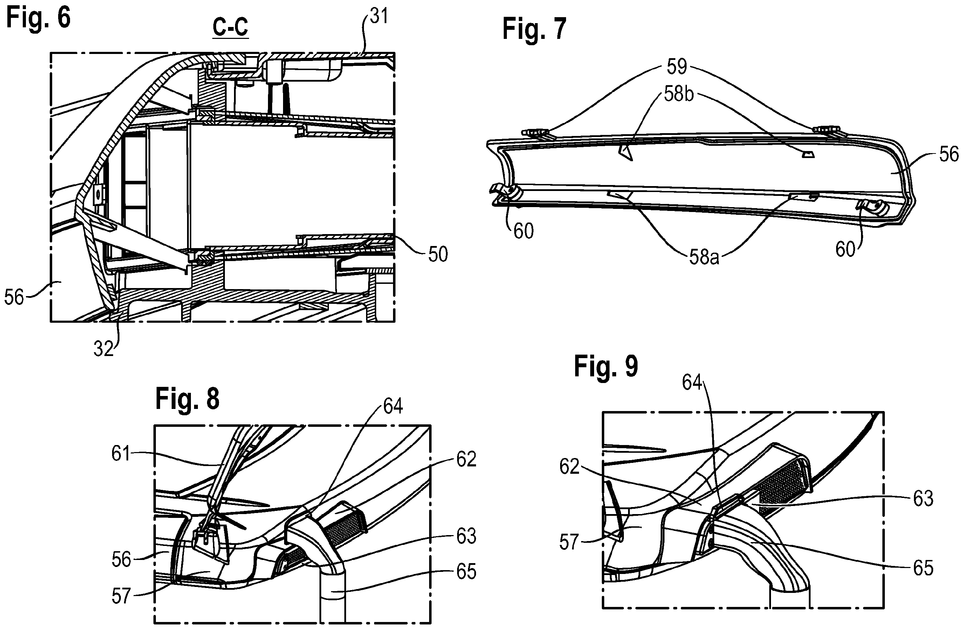

In Fig. 6 ist eine Teilschnittansicht des Kabinendaches 23 entlang der Linie C-C gemäß Fig. 2 dargestellt, welche den Aufnahmeabschnitt 50 für einen der Luftfilter 49 zeigt. Der Aufnahmeabschnitt 50 erstreckt sich im Wesentlichen waagerecht zwischen der Oberschale 31 und der Unterschale 32.

Fig. 7 zeigt ein Abdeckelement 56, welches den Aufnahmeabschnitt 50 verschließt. Das Abdeckelement 56 ist lösbar an einer zwischen der Oberschale 31 und der Unterschale 32 ausgebildeten umlaufenden Seitenwand 57 angeordnet. In montierter Position schließt das Abdeckelement 56 bündig mit der umlaufenden Seitenwand 57 ab. Das Abdeckelement 56 weist zu seiner Befestigung an der Oberschale 31 Befestigungsabschnitte 59 auf, welche ein Hochschwenken des Abdeckelementes 56 in Richtung der Oberschale 31 ermöglichen. Zur lösbaren Verbindung des Abdeckelementes 56 mit der Unterschale 32 sind Befestigungselemente 60 vorgesehen. Das Abdeckelement 56 weist auf seiner Innenseite zumindest zwei Paar Stege 58a, 58b auf, die sich abschnittsweise in Richtung des Aufnahmeabschnittes 50 erstrecken. Die Stege 58a, 58b eines Paares weisen unterschiedliche Längen auf, welches der nachgewölbten Kontur des Abdeckelementes 56 geschuldet ist. Die Länge der Stege 58a, 58b ist so bemessen, dass bei in den Aufnahmeabschnitt 50 eingebautem Luftfilter 49 sich die Stege 58a, 58b am Rahmen des Luftfilters 49 abstützen und diesen in dem Aufnahmeabschnitt 50 fixieren, wobei zugleich das Abdeckelement 56 bündig mit der umlaufenden Seitenwand 57 abschließt. Wurde das Filterelement 49 nicht korrekt in den Aufnahmeabschnitt 50 eingesetzt, führt das dazu, dass das Abdeckelement 56 nicht bündig mit der umlaufenden Seitenwand 57 abschließen kann.

In den Fig. 8 und 9 ist eine Teilansicht des Kabinendaches 23 von schräg hinten dargestellt. An der umlaufenden Seitenwand 57 ist ein Dachseitenelement 61 schwenkbar angelenkt, welches sich aus einer zur Oberschale 31 im Wesentlichen parallelen Position in eine unter einem Winkel zur Oberschale 31 geneigte Position überführen lässt. Letztere geneigte Position des Dachseitenelementes 61 ist in Fig. 8 dargestellt. An der Rückseite des Kabinendaches 23 weist die umlaufende Seitenwand 57 einen Abschnitt 62 mit Luftzufuhröffnungen 62a auf, an welchen sich der Ansaugkanal 46 anschließt. An dem Abschnitt 62 ist ein zur Oberseite des Kabinendaches 23 hin offen ausgeführtes Aufnahmeelement 63 angeordnet. In das Aufnahmeelement 63 ist ein endseitig an einem Filterschlauch 65 angeordnetes flanschförmiges Anschlusselement 64 von oben formschlüssig einführbar. Der außenseitig an der Kabine 13 angeordnete Filterschlauch 65 dient der Vorfiltration von großen Schmutzpartikeln aus der angesaugten Luft, wodurch die Standzeit der Luftfilter 49 verlängert wird. Hierzu ist die formschlüssige Verbindung zwischen dem Aufnahmeelement 63 und dem Anschlusselement 64 als Schwalbenschwanzverbindung ausgebildet. Die Bedienperson muss für das Anschließen bzw. das Lösen des Filterschlauches 65 lediglich das Dachseitenelement 61 hochschwenken und kann anschließend das Anschlusselement 64 in vertikaler Richtung in das Aufnahmeelement 63 einführen bzw. hinausschieben. Das heruntergeschwenkte Dachseitenelement 61 verhindert in montierter Position des Filterschlauches 65 das Hinausgleiten des Anschlusselementes 64 aus dem Aufnahmeelement 63.

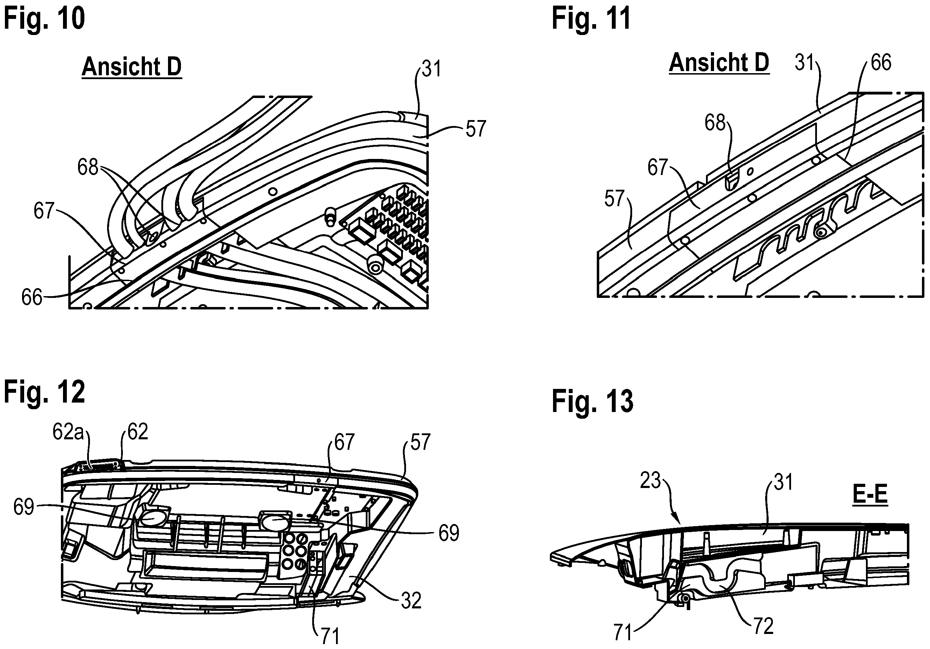

In den Fig. 10 und 11 ist eine perspektivische Teilansicht D gemäß Fig. 2 des Kabinendaches 23 von hinten dargestellt. In der umlaufenden Seitenwand 57 ist eine Aussparung 66 angeordnet. Die Aussparung 66 ist für Kabinendächer 23 bzw. Kabinen 13, die für unterschiedliche Arbeitsfahrzeuge 1, wie zum Bespiel Traktoren, selbstfahrende Mähdrescher oder Feldhäcksler, verwendet werden sollen, einheitlich dimensioniert. In die Aussparung 66 wird ein mit zumindest einer Durchtrittsöffnung 68 versehener Wandeinsatz 67 eingebracht, welcher die Aussparung 66 verschließt. In Fig. 10 ist dabei eine erste Ausführungsform des Wandeinsatzes 67 mit mehreren Durchtrittsöffnungen 68 dargestellt. In Fig. 11 ist eine zweite Ausführungsform des Wandeinsatzes 67 mit nur einer Durchtrittsöffnung 68 dargestellt. Die Anzahl und Ausgestaltung der Durchtrittsöffnungen 68 des jeweiligen Wandeinsatzes 67 hängt vom jeweiligen Typ des Arbeitsfahrzeuges 1 ab.

In Fig. 12 ist eine perspektivische Teilansicht des Kabinendaches 23 von unten dargestellt. Zwischen der Unterschale 32 und der Oberschale 31 sind mehrere hohlzylindrische Abschnitte 69 mit geschlossener Mantelfläche angeordnet. Die hohlzylindrischen Abschnitte 69 können dabei identische oder voneinander abweichende Querschnittsformen aufweisen. Eine in die Unterschale 32 mündende offen ausgeführte Grundfläche 70 des jeweiligen hohlzylindrischen Abschnittes 69 ist durch eine nicht dargestellte Lautsprechermembrane dichtend verschließbar. Die jeweils durch die Lautsprechermembrane verschlossenen hohlzylindrischen Abschnitte 69 bilden einen Resonanzkörper aus. Die Volumina der hohlzylindrischen Abschnitte 69 können jeweils durch ein Volumenbegrenzungselement veränderbar sein. Weiterhin zeigt die Darstellung in Fig. 12, dass das Innere der Kabine 13 durch einen im Kabinendach 23 angeordneten Entlüftungskanal 71 mit der Umgebung strömungstechnisch permanent verbunden ist. Der Entlüftungskanal 71 weist einen Abschnitt 72 mit einem im Wesentlichen U-förmigen Verlauf auf, was in der Teilansicht des Kabinendaches 23 im Längsschnitt entlang der Linie E-E gemäß Fig. 2 in Fig. 13 näher dargestellt ist.

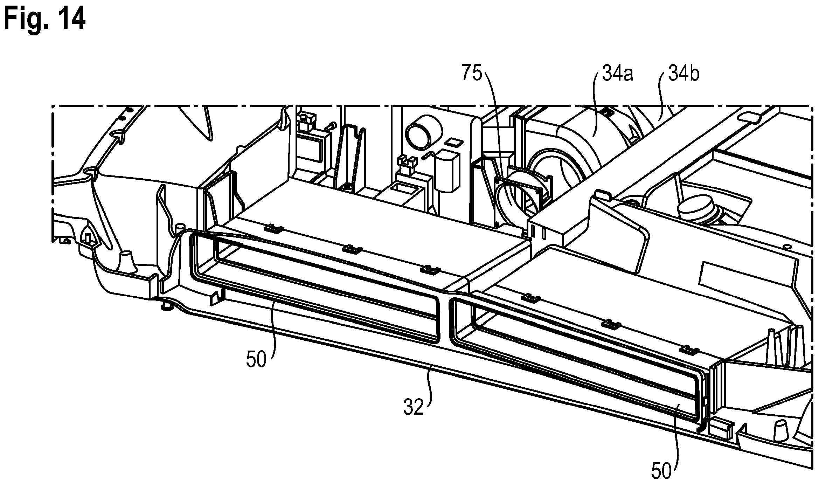

Die Darstellung in Fig. 14 zeigt eine perspektivische Teilansicht des Kabinendaches 23 von der Seite. Die Aufnahmeabschnitte 50 sind ohne eingesetzte Luftfilter 49 dargestellt. Durch den freien vorderen Aufnahmeabschnitt 50 lässt sich der Umluftfilter 51 nach außen herausziehen. Diese Anordnung hat den Vorteil, dass der Umluftfilter 51 nicht, wie im Stand der Technik üblich, nach innen in die Kabine entleert werden muss, sondern nach außen. Durch das Entnehmen des liegend angeordneten Umluftfilters 51 nach außen wird das Herausrieseln von Partikeln, die der Filter aufgenommen hat, vermieden.

Benachbart zu den Gebläsen 34a und 34b ist ein Zusatzgebläse 75 angeordnet. Das Zusatzgebläse 75 dient dazu, den bei einem Austausch der als Taschenfilter ausgeführten Luftfilter 49 durch Filterelemente, beispielsweise der Kategorie 4 oder darunterliegend, die von den Aufnahmeabschnitten 50 aufgenommen und dem Abdeckelement 56 in gleicher Weise fixiert werden, erhöhten Zuluftbedarf auszugleichen. Hierzu sind die unterschiedlichen Filterelemente als Module ausgebildet, die an die Aufnahmeabschnitte 50 angepasst sind, so dass eine einfache Auswechselbarkeit gegeben ist.

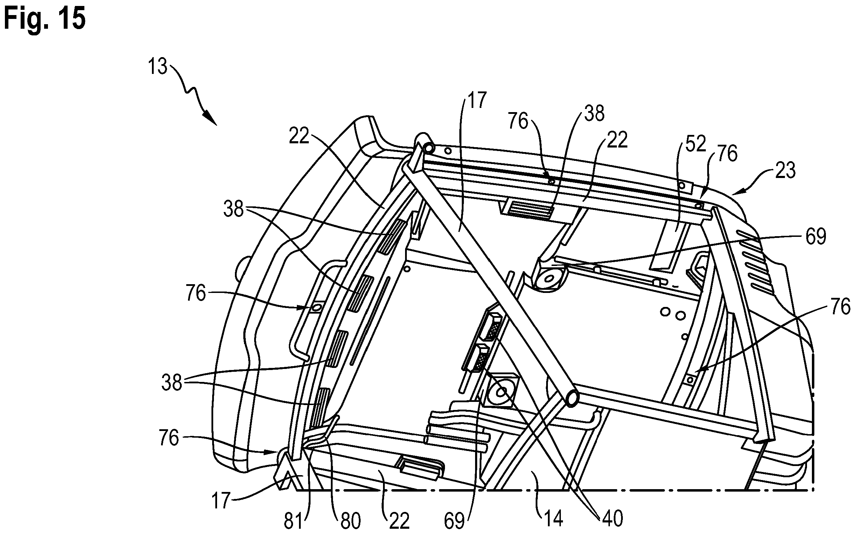

In Fig. 15 ist eine perspektivische Ansicht der Kabine 13 von schräg unten dargestellt. Das Kabinendach 23 ist als vorkonfektioniertes Modul ausgeführt, welches an der Rahmenstruktur der Kabine 13 anbringbar ist. Hierzu weisen die oberen umlaufend ausgebildeten Rahmenteile 22 mehrere Befestigungspunkte 76 auf, auf denen das vormontierte Kabinendach 23 aufsetzbar ist. Vormontiert bzw. vorkonfektioniert bedeutet, dass alle für den Betrieb der Luftbehandlungsvorrichtung 33 notwendigen Komponenten in einem vorgelagerten Fertigungsschritt zwischen der Oberschale 32 und der Unterschale 33 angeordnet worden sind. Die Unterschale 33 wird durch einen daran angeordneten Dachhimmel verkleidet.

Wie insbesondere aus der Fig. 15 zu entnehmen ist, sind die ersten Luftaustrittsöffnungen 38 und die zweiten Luftaustrittsöffnungen 40 ausschließlich im Kabinendach 23 verbaut. Dabei sind im Bereich der Frontscheibe 24 mehrere erste Luftaustrittsöffnungen 38 nebeneinander angeordnet. Diese geben den von oben nach unten gerichteten ersten Luftstrom 47 ab, der im Wesentlichen entlang der Fronscheibe 24 zum Kabinenboden 14 strömt, das heißt in den Fußbereich der Bedienperson strömt. Die oberhalb des Fahrersitzes 10 angeordneten zweiten Luftaustrittsöffnungen 40 geben den auf den Kopfbereich der Bedienperson gerichteten zweiten Luftstrom 48 ab. Wie bereits weiter oben ausgeführt, besteht zwischen dem wärmeren ersten Luftstrom 47 und dem kühleren zweiten Luftstrom 48 eine von der Bedienperson ohne Hilfsmittel wahrnehmbare Temperaturdifferenz, um eine für das Empfinden der Bedienperson angenehme Temperaturverteilung bzw. Temperaturschichtung zu erhalten.

Zur Beeinflussung der Temperaturverteilung lässt sich die Beimischung von durch die Kühlvorrichtung 35 gekühlter Zuluft mittels der Klappe 43 steuern. Die Klappe 43 kann durch einen Stellmotor verstellt werden, der wiederum durch einen zusätzlichen Temperatursensor ansteuerbar sein kann.

In der Unterschale oder der Oberschale des Kabinendachs ist zumindest eine Führungsnut 81 angeordnet, welche der abschnittsweisen formschlüssigen Aufnahme zumindest eines Schlauchs 80 zur Abführung von Kondensat dient. Die zumindest eine Führungsnut 81 ermöglicht es, den in eine A-Säule 17 der Rahmenstruktur mündenden Schlauch insbesondere im Übergangsbereich von dem Kabinendach in die A-Säule 17 knick- und stauchungsfrei zu führen. So wird dadurch die Vormontage vereinfacht, wobei bei der Montage des vorkonfektionierten Kabinendaches 23 auf der Rahmenstruktur durch die Führungsnut 81 verhindert wird, dass der Schlauch 80 beim Verbinden mit der A-Säule 17 abgeknickt wird, was einen Abfluss des Kondensats zumindest einschränkt.

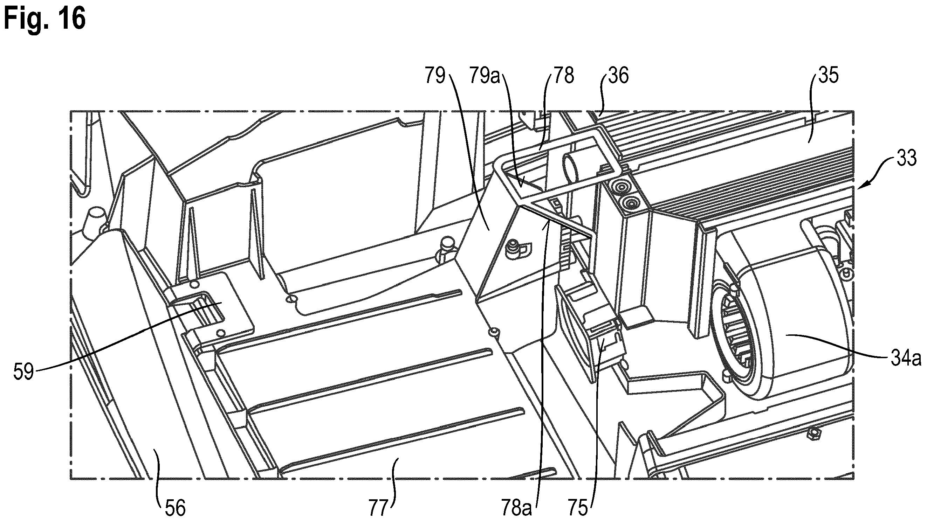

In Fig. 16 ist eine perspektivische Teilansicht auf die Unterschale 32 von oben dargestellt. Die Luftbehandlungsvorrichtung 33 weist zumindest einen Anschluss 77 auf, der mit einem korrespondierenden Gegenanschluss 78 verbunden ist. Der Gegenschluss 78 führt einen gekühlten Luftstrom einem in das Kabinendach 23 integrierten Dachkühlfach 76 zu. Der Anschluss 77 als auch der Gegenanschluss 78 weisen jeweils geneigte Anlageflächen 77a, 78a auf. Die Anlageflächen 77a und 78a sind zueinander komplementär ausgebildet, so dass das Einsetzen der Luftbehandlungsvorrichtung 33 zugleich zu einer dichtenden Verbindung des zumindest einen Anschlusses 77 mit dem Gegenanschluss 78 führt. Die Luftbehandlungsvorrichtung 33 kann im Bereich des ersten Luftverteilkanals 37 ebenfalls mit geneigten Anlageflächen ausgeführt sein, so dass auch hier eine Abdichtung bei der Montage der Luftbehandlungsvorrichtung 33 erreicht werden kann.

**Bezugszeichenliste**

| | | | |
|---|---|---|---|
| 1 | Traktor | 30 | Heckscheibe |
| 2 | Motorgehäuse | 31 | Oberschale |
| 3 | Getriebe- und Hinterachsgehäuse | 32 | Unterschale |
| 4 | Vorderachse | 33 | Luftbehandlungsvorrichtung |
| 5 | Radachse | 34a | Gebläse |
| 6 | Hinterrad | 34b | Gebläse |
| 7 | Kotflügel | 35 | Kühlvorrichtung |
| 8 | Kotflügel | 36 | Heizvorrichtung |
| 9 | Fahrerstand | 37 | Erster Luftverteilkanal |
| 10 | Fahrersitz | 38 | Erste Luftaustrittsöffnung |
| 11 | Lenkeinrichtung | 39 | Zweiter Luftverteilkanal |
| 12 | Bedieneinheit | 40 | Zweite Luftaustrittsöffnung |
| 13 | Fahrerkabine | 41 | Mischzone |
| 14 | Kabinenboden | 42 | Erster Bypass |
| 15 | Rahmenteil | 43 | Klappe |
| 16 | A-Säule | 44 | Zweiter Bypass |
| 17 | A-Säule | 45 | Klappe |
| 18 | B-Säule | 46 | Ansaugkanal |
| 19 | B-Säule | 47 | Erster Luftstrom |
| 20 | Hintere Säule | 48 | Zweiter Luftstrom |
| 21 | Hintere Säule | 49 | Luftfilter |
| 22 | Rahmenteil | 50 | Aufnahmeabschnitt |
| 23 | Kabinendach | 51 | Umluftfilter |
| 24 | Frontscheibe | 52 | Entlüftungsklappe |
| 25 | Frontscheibenteil | 53 | Rippe |
| 26 | Kabinentür | 54 | Prallwand |
| 27 | Kabinentür | 55 | Gehäuse |
| 28 | Seitenfenster | 56 | Abdeckelement |
| 29 | Seitenfenster | 57 | Seitenwand |
| 58a | Steg | ZL | Zuluftstrom |
| 58b | Steg | | |
| 59 | Befestigungsabschnitt | | |
| 60 | Befestigungselement | | |
| 61 | Dachseitenelement | | |
| 62 | Abschnitt | | |
| 63 | Aufnahmeelement | | |
| 64 | Anschlusselement | | |
| 65 | Filterschlauch | | |
| 66 | Aussparung | | |
| 67 | Wandeinsatz | | |
| 68 | Durchtrittsöffnung | | |
| 69 | Hohlzylindrischer Abschnitt | | |
| 70 | Grundfläche von 69 | | |
| 71 | Entlüftungskanal | | |
| 72 | U-förmiger Abschnitt | | |
| 73 | Profilelement | | |
| 74 | Überstand | | |
| 75 | Zusatzgebläse | | |
| 76 | Befestigungspunkt | | |
| 77 | Dachkühlfach | | |
| 78 | Anschluss | | |
| 78a | Anlagefläche | | |
| 79 | Gegenanschluss | | |
| 79a | Anlagefläche | | |
| 80 | Schlauch | | |
| 81 | Führungsnut | | |

## Patentansprüche

1. Kabine (13) für ein landwirtschaftliches Arbeitsfahrzeug (1), umfassend einen Kabinenboden (14), einen darauf angeordneten, aus einer Rahmenstruktur bestehenden Kabinenkörper sowie ein Kabinendach (23), welches zumindest zwei Schalen (31, 32) umfasst, wobei
das Kabinendach (23) als ein vorkonfektioniertes Modul ausgeführt ist, welches auf den Kabinenkörper aufsetzbar ist und dass zwischen den zumindest zwei Schalen (31, 32) des als vorkonfektioniertes Modul ausgeführten Kabinendachs (23) eine Luftbehandlungsvorrichtung (33) angeordnet ist, wobei die zumindest zwei Schalen eine Oberschale (31) und eine Unterschale (32) enthalten, und die Luftbehandlungsvorrichtung in der Unterschale eingesetzt ist, **dadurch gekennzeichnet, dass** die Luftbehandlungsvorrichtung geneigte Anlageflächen (78a) aufweist, die in montierter Position mit komplementären Anlageflächen (79a) bündig abschließen, wobei die geneigten Anlageflächen (78a) und die komplementären Anlageflächen (79a) eingerichtet sind die Luftbehandlungsvorrichtung (33) formschlüssig zu positionieren.

2. Kabine (13) nach Anspruch 1, **dadurch gekennzeichnet, dass** die Rahmenstruktur des Kabinenkörpers zur Aufnahme des als Modul ausgeführten Kabinendaches (23) von oben eingerichtet ist.

3. Kabine (13) nach Anspruch 2, **dadurch gekennzeichnet, dass** die Rahmenstruktur umlaufend ausgebildete obere Rahmenteile (22) aufweist, welche mit Befestigungspunkten (76) zur Fixierung des Kabinendaches (23) versehen sind.

4. Kabine (13) nach Anspruch 1, **dadurch gekennzeichnet, dass** die Luftbehandlungsvorrichtung (33) jeweils zumindest einen Anschluss zur Zu- und Abführung eines Luftstromes aufweist, welche mit korrespondierenden Gegenanschlüssen im Kabinendach (23) verbindbar sind, wobei jeweilige die Anschlüsse der Luftbehandlungsvorrichtung (33) und die Gegenanschlüsse umgebende Rahmenelemente zur Anschlussebene geneigte komplementäre Anlageflächen aufweisen.

5. Kabine (13) nach einem der Ansprüche 3 oder 4, **dadurch gekennzeichnet, dass** die Anlageflächen (78a, 79a) mit Dichtelementen versehen sind.

6. Kabine (13) nach einem der vorangehenden Ansprüche, **dadurch gekennzeichnet, dass** in zumindest einer der Schalen (31, 32) des Kabinendachs (23) wenigstens eine Führungsnut (81) angeordnet ist, welche der abschnittsweise formschlüssigen Aufnahme zumindest eines Schlauchs (80) zur Abführung von Kondensat dient.

7. Landwirtschaftliches Arbeitsfahrzeug (1) mit einer Kabine (13), **dadurch gekennzeichnet, dass** die Kabine (13) nach einem der Ansprüche 1 bis 6 ausgeführt ist.

## Claims

1. A cabin (13) for an agricultural working vehicle (1), comprising a cabin floor (14), a cabin body disposed thereon which consists of a frame structure, as well as a cabin roof (23) which comprises at least two shells (31, 32), wherein the cabin roof (23) is configured as a prefabricated module which can be positioned on the cabin body, and in that an air treatment device (33) is disposed between the at least two shells (31, 32) of the cabin roof (23) configured as a prefabricated module, wherein the at least two shells contain an upper shell (31) and a lower shell (32), and the air treatment device is inserted into the lower shell,
**characterized in that** the air treatment device has inclined bearing surfaces (78a) which, in the mounted position, are flush with complementary bearing surfaces (79a), wherein the inclined bearing surfaces (78a) and the complementary bearing surfaces (79a) are configured in order to position the air treatment device (33) in an interlocking manner.

2. The cabin (13) according to claim 1, **characterized in that** the frame structure of the cabin body is configured to receive the cabin roof (23) implemented as a module from above.

3. The cabin (13) according to claim 2, **characterized in that** the frame structure has circumferential upper frame parts (22) which are provided with mounting points (76) for attaching the cabin roof (23).

4. The cabin (13) according to claim 1, **characterized in that** the air treatment device (33) has at least one connector respectively for the delivery and discharge of a stream of air which can be connected to corresponding mating connectors in the cabin roof (23), wherein frame elements surrounding the connectors for the air treatment device (33) and for the mating connectors respectively have complementary inclined bearing surfaces.

5. The cabin (13) according to one of claims 3 or 4, **characterized in that** the bearing surfaces (78a, 79a) are provided with sealing elements.

6. The cabin (13) according to one of the preceding claims, **characterized in that** in at least one of the shells (31, 32) of the cabin roof (23), at least one guide groove (81) is provided which functions for the interlocking receipt, at least in sections, of at least one tube (80) for discharging condensate.

7. An agricultural working vehicle (1) with a cabin (13), **characterized in that** the cabin (13) is configured as claimed in one of claims 1 to 6.

## Revendications

1. Cabine (13) pour un véhicule de travail agricole (1), incluant un sol de cabine (14), un corps de cabine disposé dessus, constitué d'une structure de bâti, ainsi qu'un toit de cabine (23) qui inclut au moins deux coques (31, 32), le toit de cabine (23) étant conformé en module préconfectionné, lequel peut être posé sur le corps de cabine, et en ce qu'entre les au moins deux coques (31, 32) du toit de cabine (23) conformé en module préconfectionné est disposé un dispositif de traitement d'air (33), les au moins deux coques contenant une coque supérieure (31) et une coque inférieure (32), et le dispositif de traitement d'air étant logé dans la coque inférieure, **caractérisée en ce que** le dispositif de traitement d'air comporte des surfaces d'appui inclinées (78a) qui, en position montée, coïncident de manière jointive avec des surfaces d'appui complémentaires (79a), les surfaces d'appui inclinées (78a) et les surfaces d'appui complémentaires (79a) étant agencées pour positionner le dispositif de traitement d'air (33) par complémentarité de formes.

2. Cabine (13) selon la revendication 1, **caractérisée en ce que** la structure de bâti du corps de cabine est agencée pour recevoir le toit de cabine conformé en module (23) par le haut.

3. Cabine (13) selon la revendication 2, **caractérisée en ce que** la structure de bâti comporte des parties de bâti supérieures (22) conformées en périphérie, lesquelles sont munies de points de fixation (76) pour la fixation du toit de cabine (23).

4. Cabine (13) selon la revendication 1, **caractérisée en ce que** le dispositif de traitement d'air (33) comporte respectivement au moins un raccord pour l'entrée et la sortie d'un courant d'air, lesquels peuvent être reliés à des raccords antagonistes dans le toit de cabine (23), des éléments de bâti respectifs qui entourent les raccords du dispositif de traitement d'air (33) et les raccords antagonistes comportant des surfaces d'appui complémentaires inclinées vers le plan d'appui.

5. Cabine (13) selon une des revendications 3 ou 4, **caractérisée en ce que** les surfaces d'appui (78a, 79a) sont munies d'éléments d'étanchéité.

6. Cabine (13) selon une des revendications précédentes, **caractérisée en ce que** dans au moins une des coques (31, 32) du toit de cabine (23) est ménagée au moins une rainure de guidage (81) qui sert à recevoir par complémentarité de formes, par portions, au moins un flexible (80) pour évacuer du condensat.

7. Véhicule de travail agricole (1) comprenant une cabine (13), **caractérisé en ce que** la cabine (13) est conçue selon une des revendications 1 à 6.
